# EUROPEAN PATENT APPLICATION

(11) **EP 4 141 897 A1**
(43) Date of publication of application: **01.03.2023**
(21) Application number: 20936963.6
(22) Date of filing: 22.05.2020
(51) Int. Cl.: H01F 27/24

(54) **MAGNETIC ELEMENT, POWER SOURCE, AND ELECTRONIC DEVICE**

(71) Applicant: Huawei Digital Power Technologies Co., Ltd., Shenzhen, Guangdong 518043 (CN)
(72) Inventor: YU, Peng, Shenzhen, Guangdong Guangdong 518129 (CN); CHEN, Shanwu, Shenzhen, Guangdong Guangdong 518129 (CN); WANG, Xiao, Shenzhen, Guangdong Guangdong 518129 (CN)
(74) Representative: Isarpatent
(86) International application number: PCT/CN2020/091918
(87) International publication number: WO 2021/232432

(57) **Abstract**

This application provides a magnetic element, a power supply, and an electronic device. The magnetic element includes a magnetic core, a coil, and a skeleton, an accommodation space is provided in the magnetic core, and the coil is located in the accommodation space. Surfaces of the magnetic core include a first end face, a second end face, and a side surface connecting the first end face and the second end face. The skeleton is disposed on the side surface and is fixedly connected to the magnetic core. The first end face is flush with or protrudes from one end of the skeleton, and the second end face is flush with or protrudes from the other end of the skeleton. When the magnetic element in this application is used, because the skeleton is located at a periphery of the side surface of the magnetic core, the skeleton does not protrude from the magnetic core in a thickness direction of the magnetic element, so that a thickness of the skeleton does not form a part of an overall thickness of the magnetic element, thereby implementing thinning.

## Description

### TECHNICAL FIELD

This application relates to the field of electronic component technologies, and in particular, to a magnetic element, a power supply, and an electronic device.

### BACKGROUND

With rapid development of consumer smart terminals and internet of things (internet of things, IoT) brought by mobile internet and 5th-generation (5th-generation, 5G) mobile communications technologies, new products such as smart TVs, desktop ultra-thin terminals, and electronic media screens emerge as times require. Ultra-thinness is a key feature of such electronic devices and has become a core selling point of business promotion.

Currently, a power supply built in an electronic device mostly uses an alternating current-direct current (alternating current-direct current, AC-DC) high frequency switch mode power supply, a magnetic element is a main component in this type of power supply, and the magnetic element mainly implements functions of power conversion and electrical isolation. At the same time, the magnetic element is also a bottleneck restricting reduction of a thickness of the power supply. Therefore, implementing thinning of the magnetic element is a prerequisite for implementing thinning of the power supply, and only on this basis, the related electronic device can have the feature of thinning.

Therefore, how to design a magnetic element to implement thinning is a research and development direction in the industry.

### SUMMARY

This application provides a magnetic element, a power supply, and an electronic device, to implement a thinning solution by designing a skeleton in the magnetic element.

According to a first aspect, this application provides a magnetic element, where the magnetic element includes a magnetic core, a coil, and a skeleton, an accommodation space is provided in the magnetic core, the coil is located in the accommodation space, surfaces of the magnetic core include a first end face, a second end face, and a side surface connecting the first end face and the second end face, the skeleton is disposed on the side surface and is fixedly connected to the magnetic core, the first end face is flush with or protrudes from one end of the skeleton, and the second end face is flush with or protrudes from the other end of the skeleton.

The skeleton includes a top surface facing the first end face and a bottom surface facing the second end face, which are respectively one end and the other end of the skeleton. The skeleton is mainly configured to fix the magnetic core and fix a pin in the magnetic element, and may be further configured to mount the magnetic core on a circuit board in a process of mounting the magnetic element. It may be understood that, compared with a conventional magnetic element, in the magnetic core element of this application, the coil is sleeved in the magnetic core, and therefore, a cable trough configured to place the coil does not need to be provided in the skeleton.

It may be understood that, a plane in which the first end face is located or a plane in which a position of the first end face that is far away from the second end face is located is a first reference plane, a plane in which the second end face is located or a plane in which a position of the second end face that is far away from the first end face is located is a second reference plane, and the skeleton is located between the first reference plane and the second reference plane.

Because the skeleton is located at a periphery of the side surface of the magnetic core, the first end face and the second end face of the magnetic core extend out of the skeleton or are flush with the two ends of the skeleton. In other words, one end of the skeleton does not protrude from the first end face, and the other end of the skeleton does not protrude from the second end face. A vertical distance between the first end face and the second end face is a thickness of the magnetic element. To be specific, in a thickness extension direction of the magnetic element, the skeleton does not protrude from the magnetic core, so that a thickness of the skeleton does not form a part of the overall thickness of the magnetic element, to prevent existence of the skeleton from restricting reduction of the thickness of the magnetic element, so that the magnetic element implements thinning more easily.

A maximum vertical distance between the first end face and the second end face is the thickness of the magnetic element. It may be understood that, when the magnetic element further includes a pin or another element, neither of sizes of the pin and the another element exceeds a range between the first end face and the second end face, to limit an overall size of the magnetic element, thereby facilitating thinning of the magnetic element.

In a first possible implementation of the first aspect, the skeleton is a closed frame architecture, and the skeleton is sleeved at a periphery of the magnetic core; or the skeleton is a partially encircling architecture, and the skeleton is disposed around the magnetic core. When the skeleton is the closed frame architecture and is sleeved at the periphery of the magnetic core, structural stability and rigidity of the skeleton are good, and the skeleton is sleeved at the periphery of the magnetic core, so that overall stability of the magnetic element is strong. In addition, a size of a middle hollowed-out region of the skeleton may be slightly greater than a size of the periphery of the magnetic core, so that a specific gap exists between the skeleton and the magnetic core, to facilitate mounting. In addition, the gap may be used to provide a space for disposing silica gel, to fixedly connect the skeleton and the magnetic core. When the skeleton is the partially encircling architecture and is disposed around the magnetic core, it is equivalent to providing a notch in the skeleton of the foregoing closed frame structure. In this implementation, the skeleton does not entirely encircle the magnetic core, and existence of the notch enables the skeleton to have flexibility, that is, to have an elastic deformation capability. In this case, a size of the skeleton may be designed to be small. To be specific, when the skeleton is sleeved at the periphery of the magnetic core, the skeleton is closely fitted with the magnetic core. In other words, the size of the middle hollowed-out region of the skeleton may be slightly less than the size of the periphery of the magnetic core, so that when the skeleton is disposed around the magnetic core, the skeleton has elastic deformation to some extent. The skeleton can be more firmly mounted on the magnetic core through elastic clamping force of the skeleton, and the skeleton and the magnetic core are connected without using silica gel. In this way, it is more convenient and easier to mount the skeleton on the magnetic core.

It may be understood that, when the skeleton is fixed on the magnetic core in an adhesive manner, structures of the skeleton may be more diversified, the skeleton may be a non-encircling architecture, and the skeleton may be fixed on only one of the side surfaces. The skeleton is not limited to an integrated structure, and may be alternatively a separated structure. For example, the skeleton includes at least two separate sub-skeletons, which are respectively fixed on a plurality of non-coplanar surfaces of the side surfaces. Therefore, the skeleton may be of a plurality of structures that can meet corresponding functional requirements, and is not specifically limited herein.

In a possible implementation, the side surface includes a first region adjacent to the first end face, a second region adjacent to the second end face, and an intermediate region located between the first region and the second region, the skeleton covers the intermediate region, and the first region and the second region are exposed. Because the intermediate region is located between the first region and the second region, and the skeleton covers only the intermediate region, in the thickness direction, the skeleton is located in the middle of the magnetic core, so that a space occupied by the magnetic element can be reduced. On the basis of ensuring thinning of the magnetic element, the exposed first region and second region may be assembled into a hole or a slot in the circuit board, so that a sink plate structure is formed in an architecture in which the magnetic element is mounted to the circuit board, thereby reducing a space.

In this application, an extension direction of the vertical distance between the first end face and the second end face is used as a thickness direction of the magnetic element.

The first end face and the second end face of the magnetic core may be planar surfaces, or may be arc-shaped surfaces that protrude outward. When the first end face and the second end face are the planar surfaces, the vertical distance between the first end face and the second end face is a thickness of the magnetic core, or when the first end face and the second end face are the arc-shaped surfaces that protrude outward, the thickness of the magnetic core is the maximum vertical distance between the first end face and the second end face. Therefore, a size of the side surface in the thickness direction cannot fully represent the thickness of the magnetic core. It can be learned that, the thickness of the skeleton may not be limited to not protruding from an edge of the side surface. Provided that the skeleton is located within a maximum distance range between the first end face and the second end face, existence of the skeleton does not affect the total thickness of the magnetic element.

A position relationship between the skeleton and the magnetic core may include a plurality of different implementation architectures, and the following several implementations are used as examples for description.

In an implementation, in the thickness extension direction of the magnetic element, one end of the skeleton is flush with the first end face, and the other end of the skeleton is flush with the second end face. When the first end face and the second end face are planar surfaces, the two ends of the skeleton are respectively flush with the first end face and the second end face. When the first end face and the second end face are arc-shaped surfaces that protrude outward, that the two ends of the skeleton are respectively flush with the first end face and the second end face may be understood as follows: The two ends of the skeleton are flush with positions of any height of the first end face and the second end face. Provided that one end of the skeleton does not protrude from a position of the first end face that is far away from the second end face, and the other end of the skeleton does not protrude from a position of the second end face that is far away from the first end face, the skeleton does not occupy the thickness of the magnetic element, to ensure thinning of the magnetic element. Because the two ends of the skeleton are respectively flush with the first end face and the second end face, when the skeleton is sleeved at the periphery of the magnetic core, upper and lower surfaces of an integral structure formed are flat, so that the structure is stable, and structural stability of the magnetic element is enhanced.

In an implementation, in the thickness direction of the magnetic element, one end of the skeleton is flush with the first end face, and the second end face protrudes from the other end of the skeleton. In this implementation, the thickness of the skeleton is less than the thickness of the magnetic core, and one end of the magnetic element is flat, so that the structure is stable and aesthetic. Because the second end face protrudes from the other end of the skeleton, sink plate assembly can be performed on the magnetic element more conveniently. To be specific, in a structure in which the magnetic element is mounted to the circuit board, the second end face extends into the hole or the slot of the circuit board, so that the thickness of the overall structure can be reduced. This is more conducive to implementing thinning.

It may be understood that, alternatively, one end of the skeleton may be designed to be flush with the second end face, and the first end face protrudes from the other end of the skeleton.

In a possible implementation, the magnetic core includes a first magnetic core and a second magnetic core that are fastened to each other, the first end face is a surface of the first magnetic core that is away from the second magnetic core, the second end face is a surface of the second magnetic core that is away from the first magnetic core, and the skeleton is fixed at a fastening part between the first magnetic core and the second magnetic core. It may be understood that, the magnetic core is of an up-down separated structure. The first magnetic core and the second magnetic core are fastened together in a cover shape to form the magnetic core (similar to fastening an upper cover and a lower body of a box together to form an internal accommodation space). Existence of the magnetic core of the separated structure makes the structure of the magnetic element more flexible and changeful, and makes the process of mounting and disassembling more convenient. This facilitates maintenance operation. The fastening part is a seam position formed by fastening the first magnetic core and the second magnetic core together, and the skeleton is fixed at the fastening part between the first magnetic core and the second magnetic core, so that structural stability of the magnetic core can be ensured to some extent. In this way, the first magnetic core and second magnetic core are not easily detached.

Structures of the first magnetic core and the second magnetic core may be vertically symmetrical structures, and the fastening part between the first magnetic core and the second magnetic core is located at an intermediate position of the magnetic core. In another implementation, the first magnetic core and the second magnetic core may be alternatively asymmetric structures. For example, the first magnetic core is E-shaped, and the second magnetic core is I-shaped (it may be understood that the second magnetic core is flat). After the first magnetic core and the second magnetic core are fastened, the fastening part is located at a position close to the second end face. A position at which the skeleton is fixed is at the fastening part between the first magnetic core and the second magnetic core. It may be understood that the position at which the skeleton and the magnetic core are fixedly connected is at an intermediate position of the magnetic core, or may be at a position close to the first end face or the second end face. In this implementation, a specific position relationship of the skeleton relative to the magnetic core and the position at which the skeleton is fixed on the magnetic core are not limited. In this implementation, it is emphasized strongly that the position at which the skeleton is fixed is at the fastening part between the first magnetic core and the second magnetic core, a concave part for fixing the skeleton is easily formed at the fastening part, and a fixing part on the skeleton can be extended into the concave part to implement positioning of the skeleton and the magnetic core.

In an implementation, the first magnetic core includes a first side surface connected to the first end face, the second magnetic core includes a second side surface connected to the second end face, the first side surface and the second side surface jointly form the side surface, a part of the skeleton overlaps a part of the first side surface, and a part of the skeleton overlaps a part of the second side surface. In the foregoing structure, a part of the skeleton may overlap and be connected to the first side surface, and a part of the skeleton may overlap and be connected to the second side surface, so that when the skeleton is fixedly connected to the first side surface of the first magnetic core and the second side surface of the second magnetic core, the seam between the first magnetic core and the second magnetic core can be further blocked at the same time, so that structural integrity of the magnetic element is better.

In an implementation, the skeleton includes an inner surface and the fixing part convexly disposed relative to the inner surface, the inner surface faces the side surface, the fixing part is fitted with the concave part in the magnetic core to fix the skeleton to the magnetic core, and the concave part is located at the fastening part between the first magnetic core and the second magnetic core. It should be noted that, the magnetic element in this application is a high-precision element, and a position fixing relationship between the skeleton and the magnetic core needs to be precisely controlled based on an actual requirement. Because the skeleton is sleeved at the periphery of the side surface of the magnetic core, a fixed connection between the skeleton and the magnetic core is specifically presented as a fixed connection between the inner surface and the side surface. In this implementation, the inner surface and the side surface are fixedly connected to each other in a clamping manner. To be specific, the fixing part is convexly disposed on the inner surface, the concave part is concavely provided at the fastening part between the first magnetic core and the second magnetic core, and the fixing part is fitted with the concave part in the magnetic core, to implement precise positioning and fixed connection between the skeleton and the magnetic core. It may be understood that, when the skeleton and the magnetic core are fixedly connected to each other in the foregoing clamping manner, not only positioning and connection precision is high, but also the process of mounting and dissembling between the skeleton and the magnetic core is simple. This is more conducive to subsequent maintenance operation.

In an implementation, the fixing part may be located at an intermediate part of the inner surface, or may be located on an edge of the inner surface, and different positions of the fixing part may change the position of the skeleton on the side surface, to meet different structural requirements. When the fixing part is located at the intermediate part of the inner surface, the fixing part is fitted with the concave part at the fastening part, one part of the skeleton overlaps the first side surface of the first magnetic core, another part of the skeleton overlaps the second side surface of the second magnetic core, and the skeleton is located at an intermediate part of the side surface, and can block the seam between the first magnetic core and the second magnetic core, so that structural integrity of the magnetic element is better. When the fixing part is located on the edge of the inner surface, the fixing part is fitted with the concave part at the fastening part, the skeleton overlaps only the first side surface of the first magnetic core, and does not overlap the second side surface, so that sink plate assembly can be performed on the second magnetic core to the circuit board, thereby facilitating thinning.

In an implementation, there are a plurality of clamping connection structures between the skeleton and the magnetic core. To be specific, a plurality of fixing parts are distributed on the inner surface, a plurality of concave parts are distributed at corresponding positions on the side surface, and the plurality of fixing parts are fitted with the plurality of concave parts, to implement a fixed connection between the skeleton and the magnetic core. Existence of the plurality of fixing parts and the plurality of concave parts enables the fixed connection between the skeleton and the magnetic core to have higher stability, and positioning of a position relationship between the skeleton and the magnetic core to be more accurate and reliable.

In an implementation, protrusion and groove structures may be provided on a contact surface between the first magnetic core and the second magnetic core, so that the first magnetic core and the second magnetic core are clamped and connected to each other by using the protrusion and groove structures, to form the magnetic core. Similarly, an adhesive member may be disposed on the contact surface between the first magnetic core and the second magnetic core, so that the first magnetic core and the second magnetic core are bonded together by using the adhesive member, to form the magnetic core. The adhesive member includes but is not limited to colloid, and may be alternatively any substance and structure that meet corresponding functional requirements. This is not specifically limited herein. In addition, an accommodation space and a fiber post standing in the accommodation space are formed between the first magnetic core and the second magnetic core, and the accommodation space and the fiber post are used for mounting the coil. It may be understood that, at the same time, the fiber post in the accommodation space may be cylindrical, so that the magnetic element can carry a current of higher intensity.

In an implementation, to meet safety insulation requirements of different degrees, the coil may be manufactured through winding of wires with different safety insulation degrees, such as ordinary enamelled wires, three-layer insulated wires, or film-coated wires. A layer of insulation tape or insulation paper may be laid on a surface of the coil that is in contact with the magnetic core, and in a process of assembly and use of the magnetic element, existence of the insulation tape or insulation paper can improve the safety insulation degree and can further effectively prevent the coil from being damaged, thereby improving a production yield of the magnetic element.

In an implementation, the skeleton and the magnetic core may be alternatively fixed to each other in an adhesive manner, for example, silica gel is disposed between the skeleton and the magnetic core. The skeleton and the magnetic core are fixed to each other simultaneously through a fitting connection between the fixing part and the concave part and an adhesive connection of silica gel. Existence of the silica gel enables the fixed connection between the skeleton and the magnetic core to have high stability. It may be understood that, the skeleton and the magnetic core may be connected not only by using silica gel, but may also be connected by using any substance having a corresponding viscosity function. This is not specifically limited herein.

In an implementation, a boss is further convexly disposed on one end of the skeleton, and the boss is configured to be fitted with a locating slot in the circuit board, to implement mounting and positioning of the magnetic element and the circuit board, thereby implementing sink plate assembly of the magnetic element to the circuit board. Configuration of the boss can enable the magnetic element to be accurately positioned and mounted to a corresponding position of the circuit board, and a good positioning function can be performed, so that the sink plate assembly process is more precise. In addition, sizes of distances between upper and lower surfaces of the magnetic element and the circuit board may also be accurately controlled by setting a size of the boss. In another implementation, a locating slot may be alternatively concavely provided in one end of the skeleton, and a boss adapted to the locating slot is convexly disposed at a corresponding position of the circuit board, so that a same positioning function can be performed. Positioning structures between the skeleton and the circuit board include but are not limited to the foregoing two types, and may be any structure that can meet a corresponding functional requirement. Details are not described herein.

It can be learned from the foregoing several implementations that, in a fixing process between the skeleton and the magnetic core, fitting between the fixing part and the concave part implements precise positioning between the skeleton and the magnetic core; and in a process of sink plate assembly of the magnetic element on the circuit board, fitting between the boss and the locating slot implements precise positioning between the magnetic element and the circuit board. Because the overall structure of the magnetic element has a high precision requirement, in a specific implementation, the fixing part is disposed on the skeleton, the concave part is provided in the magnetic core, and at the same time, the boss is convexly disposed on one end of the skeleton, and the locating slot adapted to the boss is concavely provided at the corresponding position of the circuit board. The fixing part, the concave part, the boss, and the locating slot coexist, so that the overall structure of the magnetic element can be accurately controlled and positioned, thereby ensuring that the overall structure of the magnetic element has good working performance while implementing thinning.

In an implementation, the magnetic element further includes a pin, the pin is fixed to the skeleton, and the pin is electrically connected to the coil. One end of the pin is connected to a terminal part of the coil that extends out of the magnetic core, and the other end of the pin is electrically connected to the circuit board, to implement a function of input, output, or grounding. Existence of the pin enables the magnetic element to better meet a corresponding functional requirement. It should be noted that, when the pin is electrically connected to the circuit board, a position of the pin can be accurately controlled by using a size structure of the pin itself and a structure of the boss that is disposed on the skeleton and that is used for positioning relative to the circuit board in the foregoing implementation.

In an implementation, a mounting hole is provided in the skeleton, the coil extends out of the magnetic core and is fixed in the mounting hole, and a part of the coil that is fixed in the mounting hole is used as the pin of the magnetic element. It may be understood that, a part of the coil may be directly led out from the magnetic core, and inserted into the mounting hole in the skeleton, to replace the pin on the skeleton.

In an implementation, the skeleton includes a body and a pin mounting part, the body is connected to the side surface, and the pin mounting part is convexly disposed on a surface of the body that is away from the side surface; the pin is fixed on the pin mounting part, or the mounting hole is provided in the pin mounting part. It may be understood that, to make the magnetic element implement thinning, a volume of the skeleton needs to be reduced to the greatest extent, so that the skeleton occupies a smaller space. However, when the volume of the skeleton is small, it becomes difficult to punch a hole in the skeleton, and it is even possible to damage the overall structure of the skeleton. Consequently, the function of the magnetic element is adversely affected. In this implementation, the pin mounting part is convexly disposed on the surface of the body that is away from the side surface, and the mounting hole runs through the pin mounting part. A problem of punching can be effectively resolved by using the foregoing structure, and a large space is not occupied, so that a thinning requirement is met to the greatest extent while the function of the magnetic element is not affected.

In an implementation, when the pin is disposed in the mounting hole, an end of the pin is bent outward, so that the end of the pin is parallel to the second end face. A bending design of the pin enables the pin not to protrude from the skeleton by a large distance in a thickness direction, to prevent a length of the pin from affecting the thickness of the magnetic element, thereby ensuring thinning of the magnetic element.

In an implementation, the mounting hole runs through the inner surface of the skeleton and an outer surface opposite to the inner surface. When the pin is disposed in the mounting hole, a run-through direction of the mounting hole is parallel to the second end face, so that a placement direction of the pin is parallel to the second end face. Therefore, the pin is fixed on the skeleton in a direction perpendicular to the thickness direction. The pin does not protrude from the skeleton in the thickness direction, so that the thickness of the skeleton does not increase, and the thickness of the magnetic element is not affected, thereby facilitating thinning of the magnetic element.

In the foregoing two implementations, the circuit board does not need to be punched to allow the pin to run through, a pad may be directly disposed on a surface of the circuit board, and the foregoing pin parallel to the second end face is welded on the pad, so that a corresponding function can be implemented, a welding process is convenient, and thinning is facilitated.

In an implementation, a limiting structure may be disposed in the mounting hole, and the limiting structure fixes the pin. Existence of the limiting structure makes the fixed connection between the pin and the skeleton stable, to avoid losing parts in a use process. Similarly, when a wire of the coil is thick, and when a part of the coil is directly fixed in the mounting hole as the pin, the limiting structure may also be used to fix the part of the coil, to improve stability of the overall structure.

In an implementation, the magnetic element further includes a ground pin and an electrical connector, the ground pin is fixed to the skeleton, and the electrical connector is electrically connected between the ground pin and the magnetic core. It should be noted that, when the magnetic element normally operates, the magnetic core needs to be grounded. If the magnetic core is not grounded, the magnetic core generates a floating voltage to ground, and existence of the floating voltage causes the magnetic core to perform intermittent disruptive discharge to ground. Consequently, structural damage is caused to the magnetic element and a large safety hazard is caused. In this implementation, one end of the electrical connector is electrically connected to the magnetic core, and the other end of the electrical connector is electrically connected to the ground pin, so that the magnetic core is grounded at one point, to eliminate a possibility of forming a floating potential, thereby avoiding adverse impact caused by the floating potential.

In an implementation, the electrical connector includes a sheet-like member and a wire, the sheet-like member is fixed between the skeleton and the side surface and is electrically connected to the side surface, one end of the wire is electrically connected to the sheet-like member, and the other end of the wire is electrically connected to the ground pin. In the foregoing structure, the electrical connector can effectively implement an electrical connection between the magnetic core and the ground pin. In a specific implementation, the sheet-like member is fixed on the side surface, so that the sheet-like member is electrically connected to the side surface. One end of the wire is electrically connected to the sheet-like member, the other end of the wire is in an annular shape through encircling, and the annular wire is sleeved on the ground pin, so that the wire is electrically connected to the ground pin. It may be understood that, a structure of the electrical connector includes but is not limited to the structure provided in this implementation, and may be alternatively any structure that meets a corresponding function. Details are not described herein.

In an implementation, the side surface of the magnetic core includes a first surface and a second surface that are disposed in a non-coplanar manner, the sheet-like member is disposed opposite to the first surface, and the ground pin is disposed opposite to the second surface. In the foregoing structure, the sheet-like member and the ground pin correspond to different side surfaces of the magnetic core, so that a short circuit between pins or coils caused by the sheet-like member can be avoided.

In an implementation, the electrical connector includes an electrically conductive adhesive, the electrically conductive adhesive is fixed to the side surface and is electrically connected to the side surface, and the electrically conductive adhesive extends to the ground pin and is electrically connected to the ground pin. It may be understood that, the electrically conductive adhesive has conductivity, and when the electrically conductive adhesive is connected to the side surface and the ground pin simultaneously, an electrical connection between the magnetic core and the ground pin can be implemented, to eliminate the possibility of forming a floating potential on the electric core, thereby avoiding adverse impact caused by the floating potential. In addition, when the electrically conductive adhesive is used as the electrical connector, connection operation is simple and has low costs. This helps reduce process costs.

In an implementation, the skeleton includes a heat conductive structure. It may be understood that, when the magnetic element works, the coil releases heat sharply. When a temperature of the coil is excessively high, working performance of the magnetic element is affected to some extent, and some irreparable damage is even caused to the magnetic element, causing a dysfunction to the magnetic element. By disposing the heat conductive structure on the skeleton, the coil can be cooled to some extent, to avoid the foregoing adverse impact, thereby ensuring a normal function of the magnetic element.

In an implementation, the heat conductive structure is embedded in the skeleton, or the heat conductive structure is disposed on the inner surface or the outer surface of the skeleton, the inner surface is a surface of the skeleton that faces the side surface of the magnetic core, and the outer surface is a surface of the skeleton that is away from the side surface of the magnetic core. It may be understood that, the heat conductive structure is disposed at any position of the skeleton, and because the skeleton is attached to the magnetic core, the heat conductive structure can achieve a particular heat conduction and cooling effect on the coil in the magnetic core. In a specific implementation, a coolant pipe is dug in the skeleton, the coolant pipe may be used to introduce a coolant, and overall cooling of the magnetic element is implemented by circulating the coolant in the pipe. In another specific implementation, a heat pipe is attached to the inner surface and/or the outer surface of the skeleton, and overall cooling of the magnetic element is implemented by using the heat pipe. A groove may be concavely provided in a surface of the skeleton, and the heat pipe is embedded in the groove, to attach and fix the heat pipe to the surface of the skeleton. The heat pipe may be alternatively adhered to the surface of the skeleton by using an adhesive, or a fastening structure is disposed on the surface of the skeleton to clamp the heat pipe to the surface of the skeleton. It may be understood that, manners in which the heat pipe is attached and fixed to the skeleton include but are not limited to the foregoing several manners, and details are not described herein. In a third specific implementation, a metal sheet having a heat conduction capability, for example, a fin structure similar to a heat sink, may be disposed on the outer surface of the skeleton, and the metal sheet and a plastic part only need to be integrally formed by using an injection molding process. The metal sheet may be disposed on any surface of the plastic skeleton. Provided that it is ensured that a part that is of the skeleton and on which the pin is disposed is an insulator, the metal sheet may be alternatively embedded in the plastic skeleton. The metal sheet can perform air-cooled heat dissipation on the magnetic element, to ensure working performance and a service life of the magnetic element. The metal sheet may be combined with the heat pipe to perform heat dissipation for the magnetic element. It should be noted that, the foregoing three heat conductive structures may coexist or may be used separately. This is not specifically limited.

It may be understood that, the heat conductive structure includes but is not limited to the foregoing three types, and may be alternatively any structure having a same function. For example, a substance having a heat conduction and cooling function is mounted in the skeleton, on the outer surface of the skeleton, and on the inner surface of the skeleton.

According to a second aspect, this application provides a power supply, the power supply includes a circuit board and the magnetic element in any implementation of the first aspect, and the skeleton is connected to the circuit board, to mount the magnetic element to the circuit board.

In an implementation, the circuit board is provided with a hole or a slot, and a part of the magnetic core is accommodated in the hole or the slot, so that sink plate assembly is performed on the magnetic element to the circuit board, enabling the power supply to implement thinning.

In an implementation, a locating slot is concavely provided in the circuit board, the locating slot is adapted to the boss on one end of the skeleton, and the locating slot is fitted with the boss, to implement accurate positioning and mounting of the magnetic element on the circuit board.

When the power supply in this application is used, because the magnetic element in this application is mounted in the power supply, and in the magnetic element, the thickness of the skeleton does not form a part of the overall thickness of the magnetic element, existence of the skeleton is prevented from restricting reduction of the thickness of the magnetic element, so that the magnetic element implements thinning, enabling the power supply to implement thinning. In addition, because sink plate assembly is performed on the magnetic element to the circuit board, the power supply meets a thinning requirement.

According to a third aspect, this application provides an electronic device. The electronic device includes any magnetic element in the first aspect or any power supply in the second aspect. Because the magnetic element or the power supply meets a thinning requirement, the electronic device is further enabled to implement thinning more easily. It may be understood that, the electronic device may be any electronic device on which the foregoing magnetic element or power supply can be mounted, such as a smart TV, a desktop ultra-thin terminal, or an electronic media screen. This is not specifically limited herein.

### BRIEF DESCRIPTION OF DRAWINGS

To describe technical solutions in embodiments of this application more clearly, the following describes the accompanying drawings required in embodiments of this application.
FIG. 1 is a schematic diagram of a structure of an electronic device according to an embodiment of this application;
FIG. 2 is a schematic diagram of a structure of a magnetic element according to an embodiment of this application;
FIG. 3a is a schematic exploded view of the magnetic element shown in FIG. 2;
FIG. 3b is a schematic diagram of a relative position between a sheet-like member and a ground pin in the magnetic element;
FIG. 4 is a schematic diagram of a coverage region of a skeleton in the magnetic element shown in FIG. 2 on a magnetic core;
FIG. 5a is a side view of the skeleton and the magnetic core in FIG. 4;
FIG. 5b is a side view of the magnetic element in another implementation of the skeleton and the magnetic core;
FIG. 5c is a side view of the magnetic element in a third implementation of the skeleton and the magnetic core;
FIG. 5d is a side view of the magnetic element in a fourth implementation of the skeleton and the magnetic core;
FIG. 6 is a schematic diagram of a structure in which the magnetic element is a partially encircling architecture;
FIG. 7a is a schematic diagram of a connection structure between the skeleton and a bracket of the magnetic core in an implementation;
FIG. 7b is a schematic diagram of a connection structure between the skeleton and the bracket of the magnetic core in another implementation;
FIG. 8 is a schematic diagram of a mounting structure of a pin in the magnetic element;
FIG. 9 is a schematic diagram of another mounting structure of the pin in the magnetic element;
FIG. 10 is a schematic diagram of a structure of a heat conductive structure in an implementation;
FIG. 11 is a schematic diagram of a structure of the heat conductive structure in another implementation;
FIG. 12 is a schematic diagram of a structure of the heat conductive structure in a third implementation;
FIG. 13 is a schematic diagram of a structure of the heat conductive structure in a fourth implementation;
FIG. 14 is a schematic diagram of a partial structure of a power supply according to an embodiment of this application;
FIG. 15 is a schematic diagram of a structure of a conventional magnetic element;
FIG. 16 is a schematic exploded view of the conventional magnetic core element shown in FIG. 15; and
FIG. 17 is a schematic diagram of a structure of another conventional magnetic element.

### DESCRIPTION OF EMBODIMENTS

The following clearly describes technical solutions in embodiments of this application with reference to accompanying drawings in embodiments of this application. It is clear that the described embodiments are merely some but not all of embodiments of this application.

Currently, a conventional magnetic element undergoes the following improvements to implement thinning:

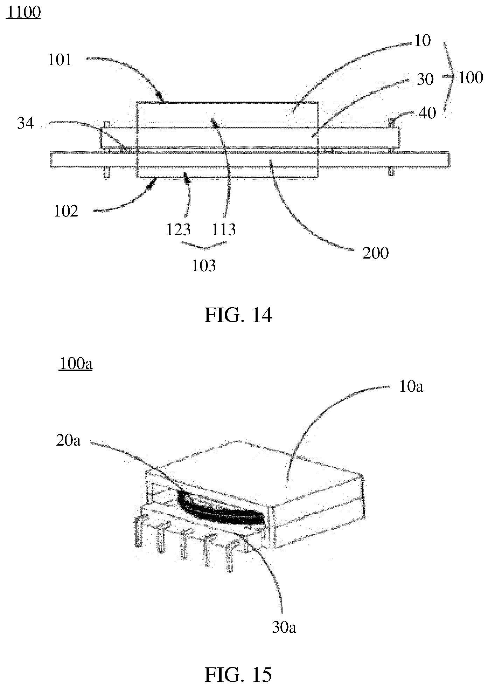

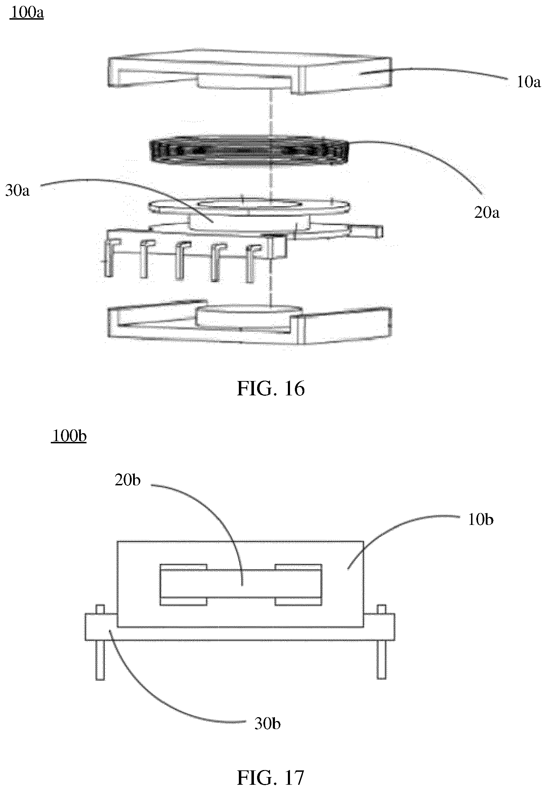

Refer to both FIG. 15 and FIG. 16. FIG. 15 is a schematic diagram of a structure of a conventional magnetic element 100a.

FIG. 16 is a schematic exploded view of the conventional magnetic core element 100a shown in FIG. 15.

In a conventional magnetic element 100a, a coil 20a uses a flat structure, to reduce a thickness of the coil 20a, and the coil 20a is sleeved on a skeleton 30a. The skeleton 30a and the coil 20a that is sleeved on the skeleton 30a are mounted together in an accommodation space of a magnetic core 10a, and the skeleton 30a is fixed to the magnetic core 10a. It may be understood that, in the foregoing conventional magnetic element 100a, the skeleton 30a is disposed inside the magnetic core 10a, and the thickness of the skeleton 30a is still a part of a thickness of the conventional magnetic core element 100a. To be specific, the thickness of the skeleton 30a restricts reduction of the thickness of the conventional magnetic core element 100a, and is not conducive to thinning of the conventional magnetic core element 100a.

Refer to FIG. 17. FIG. 17 is a schematic diagram of a structure of another conventional magnetic element 100b.

In another conventional magnetic element 100b, a skeleton on which a coil 20b is sleeved is canceled. Instead, the coil 20b is sleeved inside a magnetic core 10b, and a skeleton 30b is fixedly supported on one end of the magnetic core 10b as a base. It may be understood that, in the conventional magnetic core element 100b, the skeleton 30b is located on one end of the magnetic core 10b, and a thickness of the skeleton 30b is still a part of a thickness of the conventional magnetic core element 100b, restricts reduction of the thickness of the conventional magnetic core element 100b, and is not conducive to thinning of the conventional magnetic core element 100b.

Compared with the conventional magnetic elements (100a and 100b), the magnetic element provided in an embodiment of this application can effectively implement thinning.

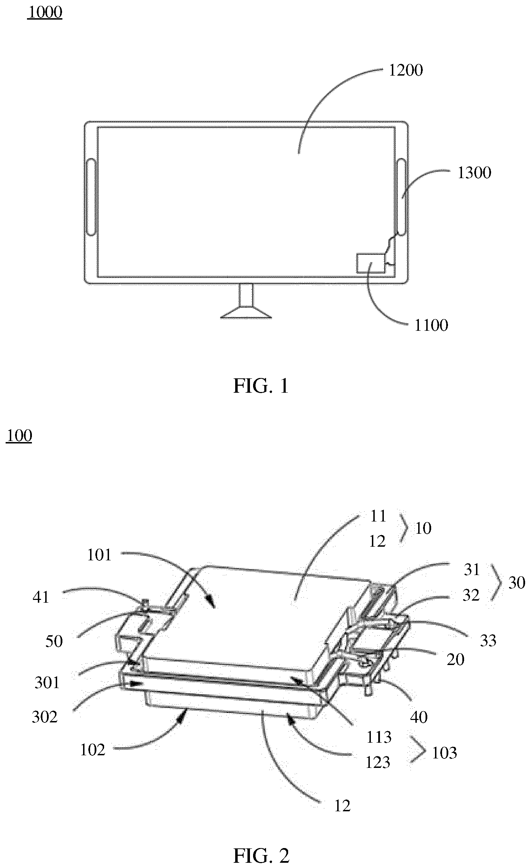

Refer to FIG. 1. FIG. 1 is a schematic diagram of a structure of an electronic device 1000 according to an embodiment of this application.

The electronic device 1000 provided in this embodiment of this application includes a power supply 1100 provided in this embodiment of this application. It should be noted that, with development of electronic technologies, the thin electronic device 1000 is increasingly favored by users. In the electronic device 1000, main working components such as a display 1200 and sound equipment 1300 need to be powered by the power supply 1100. The power supply 1100 is electrically connected to the display 1200 and the sound equipment 1300. An output of the power supply 1100 is used to drive the display 1200 to display a picture, and drive a sound-producing device such as the sound equipment 1300 to make sound, and so on. However, the power supply 1100 also restricts development of thinning of the electronic device 1000 to a great extent. In this embodiment of this application, a thickness of the power supply 1100 is reduced, and thinning of the power supply 1100 makes the electronic device 1000 provided in this embodiment of this application also meet a thinning requirement. It may be understood that, the electronic device 1000 provided in this embodiment of this application may be any electronic device 1000 that can be equipped with the power supply 1100 provided in this embodiment of this application, such as a smart TV, a desktop ultra-thin terminal, or an electronic media screen. This is not specifically limited herein.

The power supply 1100 provided in this embodiment of this application includes a circuit board and a magnetic element 100 provided in this embodiment of this application. In this embodiment of this application, the magnetic element 100 has a thinning characteristic, so that the power supply 1100 including the magnetic element 100 also has the thinning characteristic.

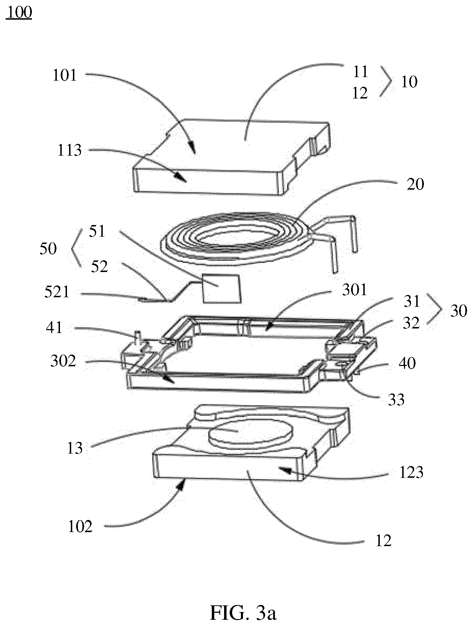

Refer to both FIG. 2 and FIG. 3a. FIG. 2 is a schematic diagram of a structure of the magnetic element 100 according to an embodiment of this application.

FIG. 3a is a schematic exploded view of the magnetic element 100 shown in FIG. 2.

The magnetic element 100 provided in this embodiment of this application includes a magnetic core 10, a coil 20, and a skeleton 30. An accommodation space is provided in the magnetic core 10, the coil 20 is located in the accommodation space, surfaces of the magnetic core 10 include a first end face 101, a second end face 102, and a side surface 103 connected between the first end face 101 and the second end face 102, the skeleton 30 is disposed on the side surface 103 and is fixedly connected to the magnetic core 10, the first end face 101 is flush with or protrudes from one end of the skeleton 30, and the second end face 102 is flush with or protrudes from the other end of the skeleton 30.

The first end face 101 and the second end face 102 of the magnetic core 10 may be planar surfaces, or may be arc-shaped surfaces that protrude outward. When the first end face 101 and the second end face 102 are the planar surfaces, a vertical distance between the first end face 101 and the second end face 102 is a thickness of the magnetic core 10, or when the first end face 101 and the second end face 102 are the arc-shaped surfaces that protrude outward, the thickness of the magnetic core 10 is a maximum vertical distance between the first end face 101 and the second end face 102.

It may be understood that, in the magnetic element 100, the skeleton 30 does not protrude from the magnetic core 10 in a thickness direction, to be specific, one end of the skeleton 30 does not protrude from the first end face 101, and the other end of the skeleton 30 does not protrude from the second end face 102. Therefore, a thickness of the skeleton 30 is not a part of an overall thickness of the magnetic element 100, and the maximum vertical distance between the first end face 101 and the second end face 102 can represent the thickness of the magnetic element 100. When the magnetic element 100 provided in this embodiment of this application is used, the thickness of the magnetic element 100 is limited only by the thickness of the magnetic core 10, instead of being limited by an accumulated thickness of the magnetic core 10 and the skeleton 30. In other words, the thickness of the skeleton 30 does not restrict reduction of the thickness of the magnetic element 100, so that the magnetic element 100 can implement thinning.

The magnetic core 10 includes a first magnetic core 11 and a second magnetic core 12 that are fastened to each other, the first end face 101 is a surface of the first magnetic core 11 that is away from the second magnetic core 12, the second end face 102 is a surface of the second magnetic core 12 that is away from the first magnetic core 11, and the skeleton 30 is fixed at a fastening part between the first magnetic core 11 and the second magnetic core 12. In addition, the first magnetic core 11 includes a first side surface 113 connected to the first end face 101, the second magnetic core 12 includes a second side surface 123 connected to the second end face 102, the first side surface 113 and the second side surface 123 jointly form the side surface 103, a part of the skeleton 30 overlaps a part of the first side surface 113, and a part of the skeleton 30 overlaps a part of the second side surface 123.

It may be understood that, the magnetic core 10 is of an up-down separated structure. The first magnetic core 11 and the second magnetic core 12 are fastened together in a cover shape to form the magnetic core 10. Existence of the magnetic core 10 of the separated structure makes the structure of the magnetic element 100 more flexible and changeful, and makes the process of mounting and disassembling more convenient. This is conducive to maintenance operation. In addition, the skeleton 30 is fixed at the fastening part between the first magnetic core 11 and the second magnetic core 12, and a part of the skeleton 30 may overlap and be connected to the first side surface 113, and a part of the skeleton 30 may overlap and be connected to the second side surface 123, so that when the skeleton 30 is fixedly connected to the first side surface 113 of the first magnetic core 11 and the second side surface 123 of the second magnetic core 12, the seam between the first magnetic core 11 and the second magnetic core 12 can be further blocked at the same time, so that structural integrity of the magnetic element 100 is better.

Structures of the first magnetic core 11 and the second magnetic core 12 may be vertically symmetrical structures, and the fastening part between the first magnetic core 11 and the second magnetic core 12 is located at an intermediate position of the magnetic core 10. In another implementation, the first magnetic core 11 and the second magnetic core 12 may be alternatively asymmetric structures. For example, the first magnetic core 11 is E-shaped, and the second magnetic core 12 is I-shaped (it may be understood that the second magnetic core 12 is flat). After the first magnetic core 11 and the second magnetic core 12 are fastened, the fastening part is located at a position close to the second end face 102. Aposition at which the skeleton 30 is fixed is at the fastening part between the first magnetic core 11 and the second magnetic core 12. It may be understood that the position at which the skeleton 30 and the magnetic core 10 are fixedly connected is at an intermediate position of the magnetic core 10, or may be at a position close to the first end face 101 or the second end face 102. In this implementation, a specific position relationship of the skeleton 30 relative to the magnetic core 10 and the position at which the skeleton 30 is fixed on the magnetic core 10 are not limited. In this implementation, it is emphasized strongly that the position at which the skeleton 30 is fixed is at the fastening part between the first magnetic core 11 and the second magnetic core 12, a concave part for fixing the skeleton 30 is easily formed at the fastening part, and a fixing part on the skeleton 30 can be extended into the concave part to implement positioning of the skeleton 30 and the magnetic core 10.

In an implementation, protrusion and groove structures may be provided on a contact surface between the first magnetic core 11 and the second magnetic core 12, so that the first magnetic core 11 and the second magnetic core 12 are clamped and connected to each other by using the protrusion and groove structures, to form the magnetic core 10. Similarly, an adhesive member may be disposed on the contact surface between the two sub magnetic cores 10, so that the two sub magnetic cores 10 are bonded together by using the adhesive member, to form the magnetic core 10. The adhesive member includes but is not limited to colloid, and may be alternatively any substance and structure that meet corresponding functional requirements. This is not specifically limited herein.

An accommodation space and a fiber post 13 standing in the accommodation space are formed between the first magnetic core 11 and the second magnetic core 12, and the accommodation space and the fiber post 13 are used for mounting the coil 20. The fiber post 13 in the accommodation space may be cylindrical, so that the magnetic element 100 can carry a current of higher intensity.

To meet safety insulation requirements of different degrees, the coil 20 may be manufactured through winding of wires with different safety insulation degrees, such as ordinary enamelled wires, three-layer insulated wires, or film-coated wires. A layer of insulation tape or insulation paper may be laid on a surface of the coil 20 that is in contact with the magnetic core 10, and in a process of assembly and use of the magnetic element 100, existence of the insulation tape or insulation paper can improve the safety insulation degree and can further effectively prevent the coil 20 from being damaged, thereby improving a production yield of the magnetic element 100. It may be understood that, the coil 20 may be an independent winding coil, or a plurality of winding coils, and the plurality of winding coils are coupled to each other.

In this application, an extension direction of the vertical distance between the first end face 101 and the second end face 102 is used as a thickness direction of the magnetic element 100.

The first end face 101 and the second end face 102 of the magnetic core 10 may be planar surfaces, or may be arc-shaped surfaces that protrude outward. When the first end face 101 and the second end face 102 are the planar surfaces, a vertical distance between the first end face 101 and the second end face 102 is a thickness of the magnetic core 10, or when the first end face 101 and the second end face 102 are the arc-shaped surfaces that protrude outward, the thickness of the magnetic core 10 is a maximum vertical distance between the first end face 101 and the second end face 102. Therefore, a size of the side surface 103 in the thickness direction cannot fully represent the thickness of the magnetic core 10. It can be learned that, the thickness of the skeleton 30 may not be limited to not protruding from an edge of the side surface 103. Provided that the skeleton 30 is located within a maximum vertical distance range between the first end face 101 and the second end face 102, existence of the skeleton 30 does not affect the total thickness of the magnetic element 100.

A position relationship between the skeleton 30 and the magnetic core 10 may include a plurality of different implementation architectures, and the following several implementations are used as examples for description.

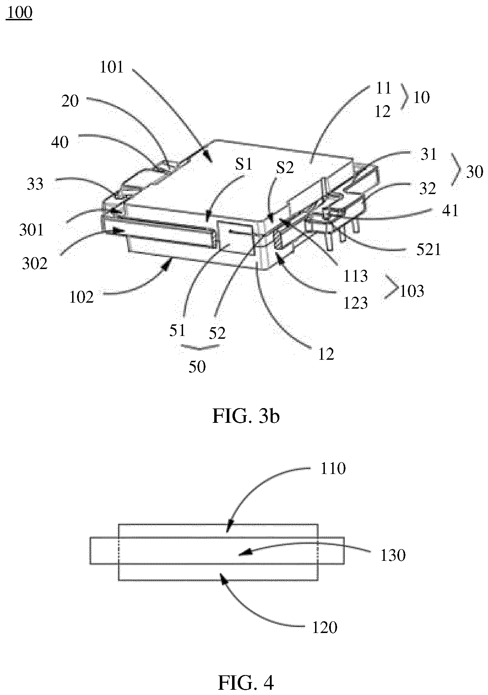

Refer to FIG. 4, FIG. 2, and FIG. 5a. FIG. 4 is a schematic diagram of a coverage region of the skeleton in the magnetic element shown in FIG. 2 on the magnetic core.

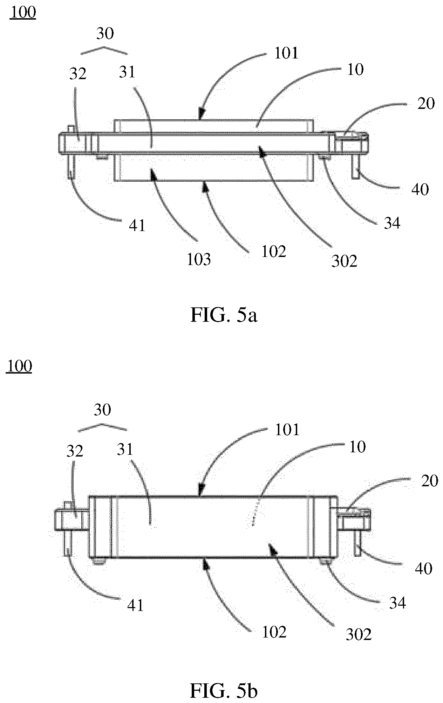

FIG. 5a is a side view of the skeleton 30 and the magnetic core 10 in FIG. 4.

In an implementation, the side surface 103 includes a first region 110 adjacent to the first end face 101, a second region 120 adjacent to the second end face 102, and an intermediate region 130 located between the first region 110 and the second region 120, the skeleton 30 covers the intermediate region 130, and the first region 110 and the second region 120 are exposed. It may be understood that, because the intermediate region 130 is located between the first region 110 and the second region 120, and the skeleton 30 covers only the intermediate region 130, in the thickness direction, the skeleton 30 is located in the middle of the magnetic core 10, so that a space occupied by the magnetic element 100 can be reduced. It may be understood that, in this implementation, the first end face 101 protrudes from one end of the skeleton, the second end face 102 protrudes from the other end of the skeleton, and the thickness of the skeleton 30 does not form a part of the overall thickness of the magnetic element 100, to ensure thinning of the magnetic element 100. On this basis, the exposed first region 110 and second region 120 may be assembled into a hole or a slot in the circuit board 200, so that a sink plate structure is formed in an architecture in which the magnetic element 100 is mounted to the circuit board 200, thereby reducing a space.

Refer to FIG. 5b. FIG. 5b is a side view of the magnetic element 100 in another implementation of the skeleton 30 and the magnetic core 10.

In an implementation, in the thickness direction of the magnetic element 100, one end of the skeleton 30 is flush with the first end face 101, and the other end of the skeleton 30 is flush with the second end face 102. When the first end face 101 and the second end face 102 are planar surfaces, the two ends of the skeleton 30 are respectively flush with the first end face 101 and the second end face 102. When the first end face 101 and the second end face 102 are arc-shaped surfaces that protrude outward, that the two ends of the skeleton 30 are respectively flush with the first end face 101 and the second end face 102 may be understood as follows: The two ends of the skeleton 30 are flush with positions of any height of the first end face 101 and the second end face 102. Provided that one end of the skeleton 30 does not protrude from a position of the first end face 101 that is far away from the second end face 102, and the other end of the skeleton 30 does not protrude from a position of the second end face 102 that is far away from the first end face 101, the skeleton 30 does not occupy the thickness of the magnetic element 100, to ensure thinning of the magnetic element 100. In addition, when the skeleton 30 is sleeved at the periphery of the magnetic core 10, upper and lower surfaces of an integral structure formed are flat, so that the structure is stable, and structural stability of the magnetic element 100 is enhanced.

For ease of understanding, the foregoing structure may be expressed as follows: A vertical projection profile edge of one end of the skeleton 30 on the side surface 103 overlaps a vertical projection profile edge of the first end face 101 on the side surface 103, and a vertical projection profile edge of the other end of the skeleton 30 on the side surface 103 overlaps a vertical projection profile edge of the second end face 102 on the side surface 103.

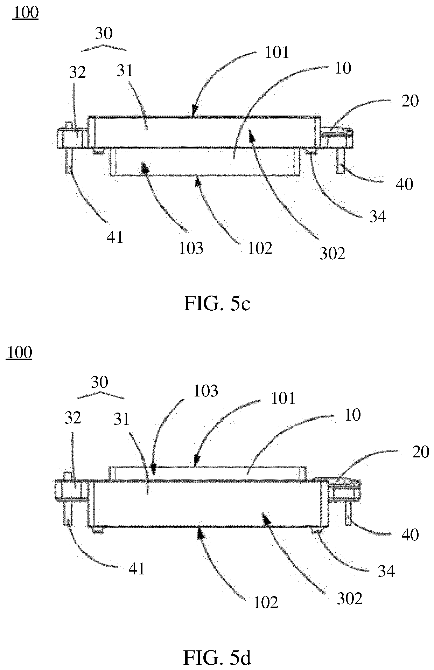

Refer to FIG. 5c. FIG. 5c is a side view of the magnetic element 100 in a third implementation of the skeleton 30 and the magnetic core 10.

In an implementation, in the thickness direction of the magnetic element 100, one end of the skeleton 30 is flush with the first end face 101, and the second end face 102 protrudes from the other end of the skeleton 30. In this implementation, the thickness of the skeleton 30 is less than the thickness of the magnetic core 10, and one end of the magnetic element 100 is flat, so that the structure is stable and aesthetic. In addition, because the second end face 102 protrudes from the other end of the skeleton 30, sink plate assembly can be performed on the magnetic element 100 more conveniently. To be specific, in a structure in which the magnetic element 100 is mounted to the circuit board 200, the second end face 102 extends into the hole or the slot of the circuit board 200, so that the thickness of the overall structure can be reduced. This is more conducive to implementing thinning.

For ease of understanding, the foregoing structure may be expressed as follows: A vertical projection profile edge of one end of the skeleton 30 on the side surface 103 overlaps a vertical projection profile edge of the first end face 101 on the side surface 103, and a vertical projection profile edge of the other end of the skeleton 30 on the side surface 103 is located in a range of the side surface 103 and a vertical projection profile range of the second end face 102 on the side surface 103.

Refer to FIG. 5d. FIG. 5d is a side view of the magnetic element 100 in a fourth implementation of the skeleton 30 and the magnetic core 10.

In an implementation, one end of the skeleton 30 may be alternatively designed to be flush with the second end face 102, and the first end face 101 protrudes from the other end of the skeleton 30.

It should be noted that, there may be a plurality of overall structures and position relationships between the skeleton 30 and the magnetic core 10, including but not limited to cases described in the foregoing several implementations, and may be any structure and position relationship that can meet a corresponding functional requirement. Details are not described herein.

In this embodiment, the skeleton 30 is a closed frame architecture, and the skeleton 30 is sleeved at a periphery of the side surface 103 and is fixedly connected to the magnetic core 10. The skeleton 30 includes an inner surface 301 and an outer surface 302. The inner surface 301 is close to the magnetic core 10 and is disposed opposite to the side surface 103. The outer surface 302 is disposed on a side of the skeleton 30 that is away from the magnetic core 10. One end of the skeleton 30 does not protrude from the first end face 101, and the other end of the skeleton 30 does not protrude from the second end face 102. It may be understood that, when the skeleton 30 is the closed frame architecture and is sleeved at the periphery of the magnetic core 10, structural stability and rigidity of the skeleton 30 are good, and the skeleton 30 is sleeved at the periphery of the magnetic core 10, so that overall stability of the magnetic element 100 is strong. In addition, a size of a middle hollowed-out region of the skeleton 30 may be slightly greater than a size of the periphery of the magnetic core 10, so that a specific gap exists between the skeleton 30 and the magnetic core 10, to facilitate mounting. In addition, the gap may be used to provide a space for disposing silica gel, to fixedly connect the skeleton 30 and the magnetic core 10.

In addition, the skeleton 30 is not limited to a full-encircling structure, and may be any structure, provided that the skeleton 30 can fix the magnetic core 10 and satisfy another corresponding required function.

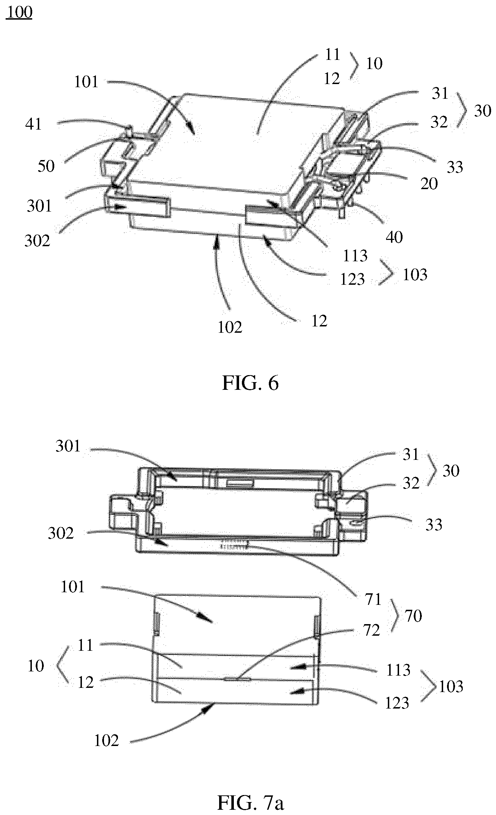

Also refer to FIG. 6. FIG. 6 is a schematic diagram of a structure in which the magnetic element 100 is a partially encircling structure.

In an implementation, the skeleton 30 is a partially encircling architecture, the skeleton 30 is disposed around the magnetic core 10, and the skeleton 30 sleeved on the magnetic core 10 is provided with a notch. When the skeleton 30 is the partially encircling architecture and is disposed around the magnetic core 10, it is equivalent to providing a notch in the skeleton 30 in the foregoing closed frame structure. In this implementation, the skeleton 30 does not entirely encircle the magnetic core 10, and existence of the notch enables the skeleton 30 to have flexibility, that is, to have an elastic deformation capability. In this case, a size of the skeleton 30 may be designed to be small. To be specific, when the skeleton 30 is sleeved at the periphery of the magnetic core 10, the skeleton 30 is closely fitted with the magnetic core 10. In other words, the size of the middle hollowed-out region of the skeleton 30 may be slightly less than the size of the periphery of the magnetic core 10, so that when the skeleton 30 is disposed around the magnetic core 10, the skeleton 30 has elastic deformation to some extent. The skeleton 30 can be more firmly mounted on the magnetic core 10 through elastic clamping force of the skeleton 30, and the skeleton 30 and the magnetic core 10 are connected without using silica gel. In this way, it is more convenient and easier to mount the skeleton 30 on the magnetic core 10.

It may be understood that, when the skeleton 30 is fixed on the magnetic core 10 in an adhesive manner, structures of the skeleton 30 may be more diversified, the skeleton 30 may be a non-encircling architecture, and the skeleton 30 may be fixed on only one of the side surfaces 103. The skeleton 30 is not limited to an integrated structure, and may be alternatively a separated structure. For example, the skeleton 30 includes at least two separate sub-skeletons, which are respectively fixed on a plurality of non-coplanar surfaces of the side surfaces 103. Therefore, the skeleton 30 may be of a plurality of structures that can meet corresponding functional requirements, and is not specifically limited herein.

It should be noted that, there are a plurality of manners in which the skeleton 30 is fixedly connected to the magnetic core 10. Details are not described herein. The following implementations are used merely as examples for detailed description.

Refer to FIG. 7a. FIG. 7a is a schematic diagram of a connection structure 70 between the skeleton 30 and a bracket of the magnetic core 10 in an implementation.

In an implementation, the skeleton 30 includes an inner surface 301 facing the side surface 103 and a fixing part 71 convexly disposed relative to the inner surface 301, the fixing part 71 is fitted with the concave part 72 in the magnetic core 10 to fix the skeleton 30 to the magnetic core 10, and the concave part 72 is located at the fastening part between the first magnetic core 11 and the second magnetic core 12. It should be noted that, the magnetic element 100 in this application is a high-precision element, and a position fixing relationship between the skeleton 30 and the magnetic core 10 needs to be precisely controlled based on an actual requirement. Because the skeleton 30 is sleeved at the periphery of the side surface 103 of the magnetic core 10, a fixed connection between the skeleton 30 and the magnetic core 10 is specifically presented as a fixed connection between the inner surface 301 and the side surface 103. In this implementation, the inner surface 301 and the side surface 103 are fixedly connected to each other in a clamping manner. To be specific, the fixing part 71 is convexly disposed on the inner surface 301, the concave part 72 is concavely provided at the fastening part between the first magnetic core 11 and the second magnetic core 12, and the fixing part 71 is fitted with the concave part 72 in the magnetic core 10, to implement precise positioning and fixed connection between the skeleton 30 and the magnetic core 10. It may be understood that, when the skeleton 30 and the magnetic core 10 are fixedly connected to each other in the foregoing clamping manner, not only positioning and connection precision is high, but also the process of mounting and dissembling between the skeleton 30 and the magnetic core 10 is simple. This is more conducive to subsequent maintenance operation. The fixing part 71 may be located at an intermediate part of the inner surface 301, or may be located on an edge of the inner surface 301, and different positions of the fixing part 71 may change the position of the skeleton 30 on the side surface 103, to meet different structural requirements.

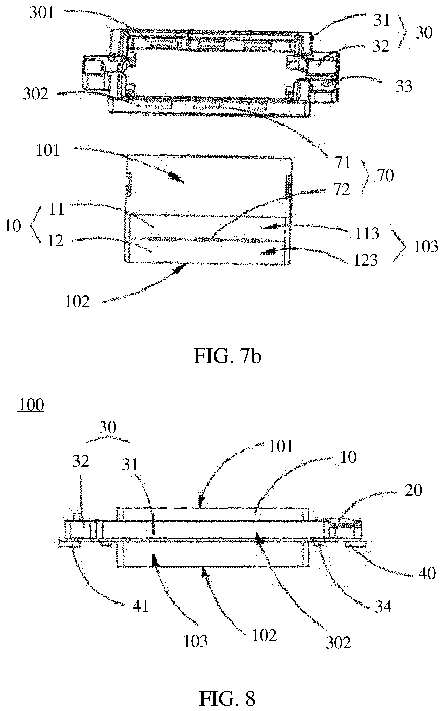

Refer to FIG. 7b. FIG. 7b is a schematic diagram of a connection structure 70 between the skeleton 30 and a bracket of the magnetic core 10 in another implementation.

In an implementation, there are a plurality of connection structures 70 between the skeleton 30 and the magnetic core 10. To be specific, a plurality of fixing parts 71 are distributed on the inner surface 301, a plurality of concave parts 72 are distributed at corresponding positions on the side surface 103, and the plurality of fixing parts 71 are fitted with the plurality of concave parts 72, to implement a fixed connection between the skeleton 30 and the magnetic core 10. Existence of the plurality of fixing parts 71 and the plurality of concave parts 72 enables the fixed connection between the skeleton 30 and the magnetic core 10 to have higher stability, and positioning of a position relationship between the skeleton 30 and the magnetic core 10 to be more accurate and reliable.

In an implementation, the skeleton 30 and the magnetic core 10 may be alternatively fixed to each other in an adhesive manner, for example, silica gel is disposed between the skeleton 30 and the magnetic core 10. The skeleton 30 and the magnetic core 10 are fixed to each other simultaneously through a fitting connection between the fixing part 71 and the concave part 72 and an adhesive connection of silica gel. Existence of silica gel enables the fixed connection between the skeleton 30 and the magnetic core 10 to have high stability, and operation of a connection manner by using silica gel is simple, and costs are low. This is more conducive to improving processing efficiency. It may be understood that, the skeleton 30 and the magnetic core 10 may be connected not only by using silica gel, but may also be connected by using any substance having a corresponding viscosity function. This is not specifically limited herein.

Refer to FIG. 5a again. It can be learned from the figure that, a boss 34 is further convexly disposed on one end of the skeleton 30, and the boss 34 is configured to be fitted with a locating slot in the circuit board 200, to implement mounting and positioning of the magnetic element 100 and the circuit board 200, thereby implementing sink plate assembly of the magnetic element 100 to the circuit board 200. Configuration of the boss 34 can enable the magnetic element 100 to be accurately positioned and mounted to a corresponding position of the circuit board 200, and a good positioning function can be performed, so that the sink plate assembly process is more precise. In addition, sizes of distances between upper and lower surfaces of the magnetic element 100 and the circuit board 200 may also be accurately controlled by setting a size of the boss 34. In another implementation, a locating slot may be alternatively concavely provided in one end of the skeleton 30, and a boss 34 adapted to the locating slot is convexly disposed at a corresponding position of the circuit board 200, so that a same positioning function can be performed. Positioning structures between the skeleton 30 and the circuit board 200 include but are not limited to the foregoing two types, and may be any structure that can meet a corresponding functional requirement. Details are not described herein.

It can be learned from the foregoing several implementations that, in a fixing process between the skeleton 30 and the magnetic core 10, fitting between the fixing part 71 and the concave part 72 implements precise positioning between the skeleton 30 and the magnetic core 10; and in a process of sink plate assembly of the magnetic element 100 on the circuit board 200, fitting between the boss 34 and the locating slot implements precise positioning between the magnetic element 100 and the circuit board 200. Because the overall structure of the magnetic element 100 has a high precision requirement, in a specific implementation, the fixing part 71 is disposed on the skeleton 30, the concave part 72 is provided in the magnetic core 10, the boss 34 is convexly disposed on one end of the skeleton 30, and the locating slot adapted to the boss 34 is concavely provided at the corresponding position of the circuit board 200. The fixing part 71, the concave part 72, the boss 34, and the locating slot coexist, so that the overall structure of the magnetic element 100 can be accurately controlled and positioned, thereby ensuring that the overall structure of the magnetic element 100 has good working performance while implementing thinning.

As shown in FIG. 3a, the magnetic element 100 further includes a pin 40, the pin 40 is fixed to the skeleton 30, and the pin 40 is electrically connected to the coil 20. One end of the pin 40 is connected to a part of the coil 20, so that the pin 40 is connected to a terminal part of the coil 20 that extends out of the magnetic core 10, and the other end of the pin 40 is electrically connected to the circuit board 200, to implement a function of input, output, or grounding. Existence of the pin 40 enables the magnetic element 100 to better meet a corresponding functional requirement. It may be understood that, a mounting hole 33 is provided in the skeleton 30. In a special case, when a wire of the coil 20 is thick, a part of the coil 20 may be directly led out from the magnetic core 10, and inserted into the mounting hole in the skeleton 30, to replace the pin on the skeleton. An electrical connection between the pin 40 and the circuit board 200 means an electrical connection to a line and/or a device on the circuit board 200. It should be noted that, when the pin 40 is electrically connected to the circuit board 200, a position of the pin 40 can be accurately controlled by using a size structure of the pin 40 itself and a structure of the boss 34 that is disposed on the skeleton 30 and that is used for positioning relative to the circuit board 200 in the foregoing implementation.

The pin 40 includes a ground pin 41, and the ground pin 41 is grounded. The magnetic element 100 further includes an electrical connector 50, the ground pin 41 is fixed to the skeleton 30, and the electrical connector 50 is electrically connected between the ground pin 41 and the magnetic core 10. It should be noted that, when the magnetic element 100 normally operates, the magnetic core 10 needs to be grounded. If the magnetic core 10 is not grounded, the magnetic core 10 generates a floating voltage to ground, and existence of the floating voltage causes the magnetic core 10 to perform intermittent disruptive discharge to ground. Consequently, structural damage is caused to the magnetic element 100 and a large safety hazard is caused. In this implementation, one end of the electrical connector 50 is electrically connected to the magnetic core 10, and the other end of the electrical connector 50 is electrically connected to the ground pin 41, so that the magnetic core 10 is grounded at one point, to eliminate a possibility of forming a floating potential, thereby avoiding adverse impact caused by the floating potential.

In this embodiment, the electrical connector 50 includes a sheet-like member 51 and a wire 52, the sheet-like member 51 is fixed between the skeleton 30 and the side surface 103 and is electrically connected to the side surface 103, one end of the wire 52 is electrically connected to the sheet-like member 51, and the other end of the wire 52 is electrically connected to the ground pin 41. In a specific implementation, the other end of the wire 52 is wound into an annular structure 521, and the annular structure 521 is sleeved on the ground pin 41. In the foregoing structure, the electrical connector 50 can effectively implement an electrical connection between the magnetic core 10 and the ground pin 41. The sheet-like member 51 may be a metal sheet-like structure. The wire 52 may be an electrically conductive line structure. The wire 52 may be alternatively replaced with a strip-shaped metal structure with specific bending performance, or replaced with an FPC.

In FIG. 3b, to display a specific position of the electrical connector 50 conveniently, a part of the skeleton 30 is truncated. This figure shows only a partial skeleton 30, and does not represent a complete structure of the skeleton 30. In this implementation, the side surfaces 103 of the magnetic core 10 include a first surface S 1 and a second surface S2 that are disposed in a non-coplanar manner, the sheet-like member 51 is disposed opposite to the first surface S1, and the ground pin 41 is disposed opposite to the second surface S2. Specifically, in an implementation, the sheet-like member 51 is directly fixed on the first surface S1, and is in contact with the first surface S1, to implement an electrical connection between the ground pin 41 and the magnetic core 10. In another implementation, the sheet-like member 51 may be alternatively fixed on an inner surface of the skeleton 30, and the sheet-like member 51 may be electrically connected to the first surface S 1 by using an electric-conductor (for example, an electrically conductive adhesive or a wire). In this architecture, there is no direct fixing relationship between the sheet-like member 51 and the first surface S 1. Instead, the sheet-like member 51 is fixed on the skeleton 30. The sheet-like member 51 and the skeleton 30 may be implemented by using an integral forming process. For example, the sheet-like member 51 is a metal sheet structure, the skeleton 30 is made of a plastic material, and manufacturing is performed through double-material injection molding. The sheet-like member 51 and the skeleton 30 may be alternatively fixedly connected to each other in another fixing manner such as screw locking. In the foregoing structure, the sheet-like member 51 and the ground pin 41 correspond to different side surfaces 103 of the magnetic core 10, so that a short circuit between pins 41 or coils 20 caused by the sheet-like member 51 can be avoided.

It may be understood that, the electrical connector 50 may be only an electrically conductive adhesive, the electrically conductive adhesive is fixed to the side surface 103 and is electrically connected to the side surface 103, and the electrically conductive adhesive extends to the ground pin 41 and is electrically connected to the ground pin 41. Serving as the electrical connector, the electrically conductive adhesive can also meet a corresponding functional requirement. In addition, use of the electrically conductive adhesive ensures that an operation of electrical connection between the electrical core 10 and the ground pin 41 is simple, and costs are low.

It may be understood that, a structure of the electrical connector 50 includes but is not limited to the structure provided in this implementation, and may be alternatively any structure that meets a corresponding function. Details are not described herein.

It should be noted that, when the pin 40 is fixed on the skeleton 30, the mounting hole 33 needs to be first provided in the skeleton 30, and then the pin 40 is fixedly connected in the mounting hole 33, to implement a corresponding function. It may be understood that, to make the magnetic element 100 implement thinning, a volume of the skeleton 30 needs to be reduced to the greatest extent, so that the skeleton 30 occupies a smaller space. However, when the volume of the skeleton 30 is small, it becomes difficult to punch a hole in the skeleton 30, and it is even possible to damage the overall structure of the skeleton 30. Consequently, the function of the magnetic element 100 is adversely affected.

In this embodiment, the skeleton 30 includes a body 31 and a pin mounting part 32, the pin mounting part 32 is convexly disposed on a surface of the body 31 that is away from the side surface 103, the pin 40 is fixed on the pin mounting part 32, or the mounting hole 33 is provided in the pin mounting part 32, and then the pin 40 is disposed in the mounting hole 33. It may be understood that, existence of the pin mounting part 32 provides a proper punching position, so that punching is more convenient, and does not cause damage to the overall structure of the skeleton 30. The pin mounting part 32 convexly disposed on a partial outer surface 302 of the skeleton 30 does not occupy a large space, so that a thinning requirement is met to the greatest extent while the structure and function of the magnetic element 100 are not affected.

Also refer to FIG. 8. FIG. 8 is a schematic diagram of a mounting structure of the pin 40 in the magnetic element 100.

It should be noted that, when the pin 40 is disposed in the mounting hole 33, an end of the pin 40 is bent outward, so that the end of the pin 40 is parallel to the second end face 102. A bending design of the pin 40 enables the pin 40 not to protrude from the skeleton 30 by a large distance in a thickness direction, to prevent a length of the pin 40 from affecting the thickness of the magnetic element 100, thereby ensuring thinning of the magnetic element 100.

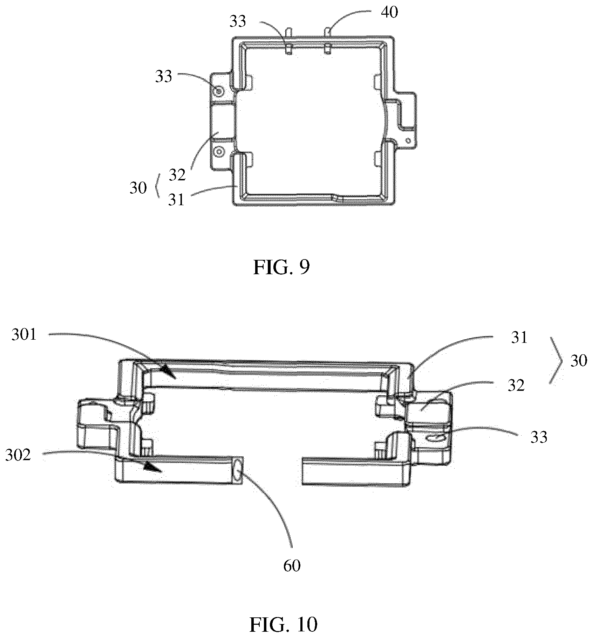

Also refer to FIG. 9. FIG. 9 is a schematic diagram of another mounting structure of the pin 40 in the magnetic element 100.

The mounting hole 33 runs through the inner surface 301 of the skeleton 30 and an outer surface 302 opposite to the inner surface 301. When the pin 40 is disposed in the mounting hole 33, a run-through direction of the mounting hole 33 is parallel to the second end face 102, so that a placement direction of the pin 40 is parallel to the second end face 102. Therefore, the pin 40 is fixed on the skeleton 30 in a direction perpendicular to the thickness direction. The pin 40 does not protrude from the skeleton 30 in the thickness direction, so that the thickness of the skeleton 30 does not increase, and the thickness of the magnetic element 100 is not affected, thereby facilitating thinning of the magnetic element 100.

In the foregoing two implementations, the circuit board 200 does not need to be punched to allow the pin 40 to run through, a pad may be directly disposed on a surface of the circuit board 200, and the foregoing pin parallel to the second end face 102 is welded on the pad, so that a corresponding function can be implemented, a welding process is convenient, and thinning is facilitated.

It may be understood that, a limiting structure may be disposed in the mounting hole 33, and the limiting structure fixes the pin 40. Existence of the limiting structure makes the fixed connection between the pin 40 and the skeleton 30 stable, to avoid losing parts in a use process. Similarly, when the wire 52 of the coil 20 is thick, and when a wire led-out line is directly used as the pin 40 and fixed in the mounting hole 33, the limiting structure may also be used to fix the wire led-out line, to improve stability of the overall structure.

It may be understood that, when the magnetic element 100 works, the coil 20 releases heat sharply. When a temperature of the coil 20 is excessively high, working performance of the magnetic element 100 is affected to some extent, and some irreparable damage is even caused to the magnetic element 100, causing a dysfunction to the magnetic element 100. Therefore, a heat conductive structure may be further disposed on the skeleton 30. There are a plurality of forms of a form structure and a position relationship of the heat conductive structure. Details are not described herein. The following implementations are used merely as examples for detailed description.

Refer to FIG. 10. FIG. 10 is a schematic diagram of a structure of the heat conductive structure in an implementation.

In an implementation, the heat conductive structure 60 is embedded in the skeleton 30. In a specific implementation, the heat conductive structure 60 is a coolant pipe, the coolant pipe is disposed in the skeleton 30 and extents along the skeleton 30. A coolant is circularly introduced in the coolant pipe, so that the coil 20 can be cooled to some extent, to avoid the foregoing adverse impact, thereby ensuring a normal function of the magnetic element 100.

The heat conductive structure 60 may be alternatively disposed on the inner surface 301 or the outer surface 302 of the skeleton 30. The inner surface 301 is a surface of the skeleton 30 that faces the side surface 103 of the magnetic core 10, and the outer surface 302 is a surface of the skeleton 30 that is away from the side surface 103 of the magnetic core 10.

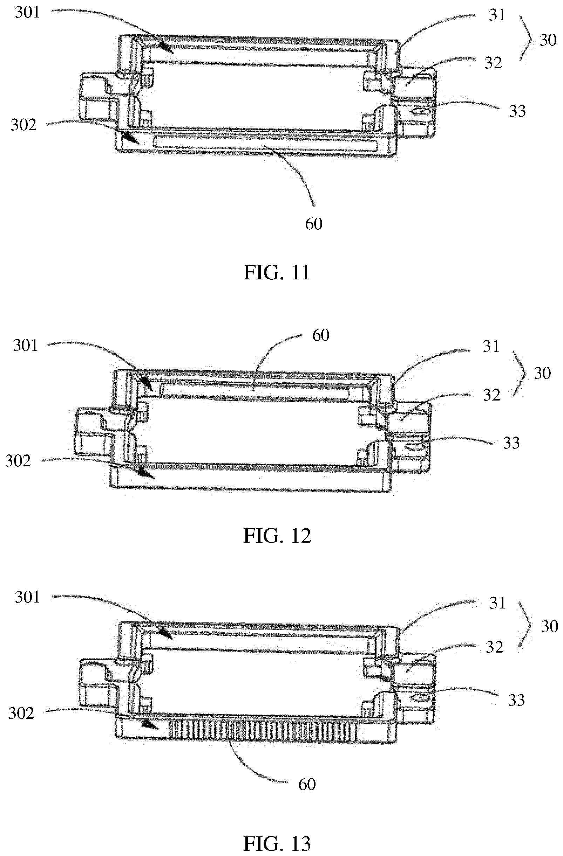

Refer to FIG. 11. FIG. 11 is a schematic diagram of a structure of the heat conductive structure in another implementation.

In an implementation, the heat conductive structure 60 is disposed on the outer surface 302 of the skeleton 30. In a specific implementation, the coolant pipe (for example, a heat pipe) is attached to the outer surface 302 of the skeleton 30, and a coolant is introduced in the coolant pipe, to perform overall cooling on the magnetic element 100.

Refer to FIG. 12. FIG. 12 is a schematic diagram of a structure of the heat conductive structure in a third implementation.

In an implementation, the heat conductive structure 60 is disposed on the inner surface 301 of the skeleton 30. In a specific implementation, the coolant pipe (for example, a heat pipe) is attached to the inner surface 301 of the skeleton 30, and a coolant is introduced in the coolant pipe, to perform overall cooling on the magnetic element 100.

Refer to FIG. 13. FIG. 13 is a schematic diagram of a structure of the heat conductive structure in a fourth implementation.

In an implementation, the heat conductive structure 60 is disposed on the outer surface 302 of the skeleton 30. The heat conductive structure is a metal sheet having a heat conduction capability, for example, a fin structure similar to a heat sink, and the metal sheet and a plastic part only need to be integrally formed by using an injection molding process. The metal sheet may be disposed on any surface of the plastic skeleton 30. Provided that it is ensured that a part that is of the skeleton 30 and on which the pin 40 is disposed is an insulator, the metal sheet may also be embedded in the plastic skeleton 30. The metal sheet can perform air-cooled heat dissipation on the magnetic element 100, to ensure working performance and a service life of the magnetic element 100. The metal sheet may be combined with the heat pipe to perform heat dissipation for the magnetic element 100.

It may be understood that, the heat conductive structure 60 is disposed at any position of the skeleton 30, and because the skeleton 30 is attached to the magnetic core 10, the heat conductive structure 60 can achieve a particular heat conduction and cooling effect on the coil 20 in the magnetic core 10.

Also refer to FIG. 14. FIG. 14 is a schematic diagram of a partial structure of a power supply 1100 according to an embodiment of this application.

The power supply 1100 provided in this embodiment of this application includes the circuit board 200 and the magnetic element 100 provided in embodiments of this application. In the magnetic element 100, the skeleton 30 is sleeved on the side surface of the magnetic core 10, and the skeleton 30 does not protrude from the magnetic core 10 in a thickness direction of the magnetic element 100, to be specific, in an extension direction of a maximum vertical distance between the first end face 101 and the second end face 102. Therefore, a thickness of the skeleton 30 is not a part of an overall thickness of the magnetic element 100. In other words, the thickness of the skeleton 30 does not restrict reduction of the thickness of the magnetic element 100, so that the magnetic element 100 can implement thinning, and the power supply 1100 is further enabled to implement thinning. Because the magnetic core 10 protrudes from the skeleton 30 in the thickness extension direction, a hole or a slot adapted to a convex part of the magnetic core 10 is dug in the circuit board 200, so that the convex part of the magnetic core 10 can be embedded into the hole or the slot, to implement sink plate assembly of the magnetic element 100 on the circuit board 200, thereby enabling the power supply 1100 to meet a thinning requirement. In addition, a positioning structure may be further disposed between the circuit board 200 and the magnetic element 100. For example, the boss 34 is convexly disposed on one end of the skeleton 30, and the locating slot is concavely provided at a corresponding position of the circuit board 200, and the boss 34 is fitted with the locating slot, to enable the magnetic element 100 to be accurately positioned and mounted on the circuit board 200.

The magnetic element, the power supply, and the electronic device provided in embodiments of this application are described in detail above. Specific embodiments are used in this specification to describe the solutions provided in this application. The descriptions in the foregoing embodiments are merely used to help understand the solutions provided in this application. In addition, a person of ordinary skill in the art may change both specific implementations and application scope based on the embodiments provided in this application. In conclusion, the content of this specification shall not be construed as a limitation on this application.

## Claims

1. A magnetic element, wherein the magnetic element comprises a magnetic core, a coil, and a skeleton, an accommodation space is provided in the magnetic core, the coil is located in the accommodation space, surfaces of the magnetic core comprise a first end face, a second end face, and a side surface connecting the first end face and the second end face, the skeleton is disposed on the side surface and is fixedly connected to the magnetic core, the first end face is flush with or protrudes from one end of the skeleton, and the second end face is flush with or protrudes from the other end of the skeleton.

2. The magnetic element according to claim 1, wherein the skeleton is a closed frame architecture, and the skeleton is sleeved at a periphery of the magnetic core; or the skeleton is a partially encircling architecture, and the skeleton is disposed around the magnetic core.

3. The magnetic element according to claim 2, wherein the side surface comprises a first region adjacent to the first end face, a second region adjacent to the second end face, and an intermediate region located between the first region and the second region, the skeleton covers the intermediate region, and the first region and the second region are exposed.

4. The magnetic element according to any one of claims 1 to 3, wherein the magnetic core comprises a first magnetic core and a second magnetic core that are fastened to each other, the first end face is a surface of the first magnetic core that is away from the second magnetic core, the second end face is a surface of the second magnetic core that is away from the first magnetic core, and the skeleton is fixed at a fastening part between the first magnetic core and the second magnetic core.

5. The magnetic element according to claim 4, wherein the first magnetic core comprises a first side surface connected to the first end face, the second magnetic core comprises a second side surface connected to the second end face, the first side surface and the second side surface jointly form the side surface, a part of the skeleton overlaps a part of the first side surface, and a part of the skeleton overlaps a part of the second side surface.

6. The magnetic element according to claim 4 or 5, wherein the skeleton comprises an inner surface and a fixing part convexly disposed relative to the inner surface, the inner surface faces the side surface, the fixing part is fitted with a concave part in the magnetic core to fix the skeleton to the magnetic core, and the concave part is located at the fastening part between the first magnetic core and the second magnetic core.

7. The magnetic element according to claim 1, wherein the one end of the skeleton is a top surface facing the first end face, the other end of the skeleton is a bottom surface facing the second end face, a boss is convexly disposed on the bottom surface, and the boss does not protrude from the second end face

8. The magnetic element according to claim 1, wherein the one end of the skeleton is a top surface facing the first end face, and the other end of the skeleton is a bottom surface facing the second end face; a mounting hole running through the top surface and the bottom surface is disposed on the skeleton; the magnetic core element further comprises a pin; and the pin is electrically connected to the coil, and the pin extends from the top surface into the mounting hole and extends from the mounting hole on the bottom surface and is bent, so that an end of the pin is parallel to the second end face.

9. The magnetic element according to claim 1, wherein the skeleton comprises an inner surface and an outer surface; the inner surface is a surface of the skeleton that faces the side surface of the magnetic core, and the outer surface is a surface of the skeleton that is away from the side surface of the magnetic core; a mounting hole running through the inner surface and the outer surface is disposed on the skeleton; and the magnetic core element further comprises a pin, and the pin is disposed in the mounting hole.

10. The magnetic element according to claim 1, wherein the magnetic element further comprises a ground pin and an electrical connector, the ground pin is fixed to the skeleton, and the electrical connector is electrically connected between the ground pin and the magnetic core.

11. The magnetic element according to claim 10, wherein the electrical connector comprises a sheet-like member and a wire, the sheet-like member is fixed between the skeleton and the side surface and is electrically connected to the side surface, one end of the wire is electrically connected to the sheet-like member, and the other end of the wire is electrically connected to the ground pin.

12. The magnetic element according to claim 11, wherein the side surface of the magnetic core comprises a first surface and a second surface that are disposed in a non-coplanar manner, the sheet-like member is disposed opposite to the first surface, and the ground pin is disposed opposite to the second surface.

13. The magnetic element according to claim 10, wherein the electrical connector comprises an electrically conductive adhesive, the electrically conductive adhesive is fixed to the side surface and is electrically connected to the side surface, and the electrically conductive adhesive extends to the ground pin and is electrically connected to the ground pin.

14. The magnetic element according to any one of claims 1 to 13, wherein the skeleton comprises a heat conductive structure.

15. The magnetic element according to claim 14, wherein the heat conductive structure is embedded in the skeleton, or the heat conductive structure is disposed on the inner surface or the outer surface of the skeleton, the inner surface is a surface of the skeleton that faces the side surface of the magnetic core, and the outer surface is a surface of the skeleton that is away from the side surface of the magnetic core.

16. The magnetic element according to claim 15, wherein the heat conductive structure comprises a coolant pipe extending within the skeleton, and a coolant is disposed in the coolant pipe.

17. The magnetic element according to claim 15, wherein the heat conductive structure comprises a heat pipe, and the heat pipe is attached to the inner surface and/or the outer surface of the skeleton.

18. The magnetic element according to claim 15, wherein the heat conductive structure comprises a metal sheet having a heat conduction capability, and the metal sheet is disposed on a surface of the skeleton.

19. A power supply, comprising a circuit board and the magnetic element according to any one of claims 1 to 18, wherein the skeleton is connected to the circuit board, to mount the magnetic element to the circuit board.

20. An electronic device, wherein the electronic device comprises the power supply according to claim 19.
